# EUROPÄISCHE PATENTSCHRIFT

(11) **EP 0 379 007 B1**
(45) Veröffentlichungstag und Bekanntmachung des Hinweises auf die Patenterteilung: **06.10.1993**
(21) Anmeldenummer: 90100193.3
(22) Anmeldetag: 05.01.1990
(51) Int. Cl.: C09D 175/06, C08G 18/42, C08G 63/91

(54) **Verfahren zur Herstellung von wässrigen, oxidativ trocknenden Alkydharzen und ihre Verwendung in oder als wässrige Lacke und Beschichtungsmassen**
Method for the preparation of aqueous, oxidatively drying alkyd resins and their use in or as aqueous lacquers or coating compositions
Procédé pour la préparation de résines alkyde aqueuses s'oxydant au séchage et leur usage comme peintures ou matières de revêtement aqueuses

(30) Priorität: 17.01.1989 DE 3901190
(43) Veröffentlichungstag der Anmeldung: 25.07.1990
(73) Patentinhaber: BAYER AG, 51368 Leverkusen (DE)
(72) Erfinder: Blum, Harald, Dr., D-4175 Wachtendonk 1 (DE); Meixner, Jürgen, Dr., D-4150 Krefeld (DE); Schreckenberg, Manfred, Dr., D-4150 Krefeld (DE); Fleiter, Lothar, Dr., D-4150 Krefeld (DE); Wellner, Wolfgang, Dr., D-5060 Bergisch-Gladbach 2 (DE)

(56) Entgegenhaltungen:
- EP-A- 0 017 199
- US-A- 30 612
- PATENT ABSTRACTS OF JAPAN, Band 8, Nr. 125, 06 Dezember 1984#

## Beschreibung

Die Erfindung betrifft ein neues Verfahren zur Herstellung von wäßrigen, oxidativ trocknenden Alkydharzen eines hohen Feststoffgehalts und deren Verwendung in oder als oxidativ trocknenden, wäßrigen Lacken und Beschichtungsmassen.

Die Überführung von Polyhydroxyverbindungen, wie z.B. Polyester oder Alkydharze in wasserverdünnbare Bindemittel mit verseifungsstabil eingebauter Carboxylgruppe durch Umsetzung mit Diisocyanaten und einer Verbindung, die mindestens zwei mit Isocyanatgruppen reagierende und mindestens eine zur Anionenbildung befähigte Gruppe enthält, ist bekannt.

In der US-PS 3 412 054 wird u.a. die Verwendung von 2,2-Bis-(hydroxymethyl)-propionsäure als Verbindung, die zwei mit Isocyanatgruppen reagierende und eine zur Anionenbildung befähigte Gruppen aufweist, zur Herstellung wäßriger Polyurethandispersionen, die trocknende Fettsäuren enthalten, beschrieben. Die Dimethylolpropionsäure wird dort über ihre Hydroxylgruppen in ein Alkydharz eingeestert und dieses dann mit Diisocyanaten zur Reaktion gebracht. Wie in der EP-A-0017199 festgestellt wird, führt dieses Verfahren zu uneinheitlich aufgebauten Produkten mit relativ langsamer Trocknung und nicht überzeugenden lacktechnischen Eigenschaften.

In der EP-A-0017199 werden ölmodifizierte, carboxylgruppenhaltige Polyurethandispersionen mit verbesserten Eigenschaften beschrieben, die z.B. aus einem Umesterungsprodukt eines natürlichen Öls und einem Polyol, wie z.B. Sojaöl und Pentaerythrit und einem isocyanatgruppenhaltigen Präpolymer, wie z.B. dem Umsetzungsprodukt von Toluylendiisocyanat und Dimethylolpropionsäure hergestellt werden.

Dies bedeutet, daß zwei höhermolekulare Vorstufen getrennt hergestellt und dann in niedrig konzentrierter, organischer Lösung, z.B. in Aceton, miteinander zur Reaktion gebracht werden müssen.

Das Aceton muß dann destillativ abgetrennt und durch lösungsvermittelnde Flüssigkeit, wie z.B. Butylglykol ersetzt werden, um ausreichende Lagerstabilitäten und gute lacktechnische Eigenschaften zu erhalten. Das Abdestillieren und Wiederaufarbeiten des Acetons führt zu einer unerwünschten Verteuerung dieser Produkte.

In den in EP-A-0017199 angeführten Beispielen weisen die ölmodifizierten, carboxylfunktionellen Polyurethane nach der Umsetzung von Polyol und Polyisocyanatpräpolymer noch NCO-Gehalte von 0,5 bis 0,9 % auf, die jedoch nicht gezielt zur Kettenverlängerung verwendet werden, sondern entweder mit dem Colöser Butylglykol und/oder beim Dispergieren mit Wasser oder Ammoniak unspezifisch abreagieren können. Dies führt je nach Reaktionsbedingungen zu ganz unterschiedlichen Produkten mit nicht vorhersehbaren Eigenschaften.

Neben diesen Nachteilen, die mit dem Herstellverfahren dieser Bindemittel verbunden sind, rückt in jüngerer Zeit noch ein weiterer Gesichtspunkt in den Vordergrund, nämlich das wachsende Umweltbewußtsein und die damit einhergehenden, verstärkten Auflagen für die Lackindustrie.

Bindemittel nach dem Stand der Technik, mit einem Anteil an organischen Lösungsmitteln von 10 bis 15 % im fertigen Lack, können den gestiegenen Anforderungen an die Umweltfreundlichkeit von Lackennicht mehr genügen.

Die in EP-A-0017199 beschriebenen Produkte weisen neben einem hohen Anteil an organischen Lösemitteln in ihrer wäßrigen Form lediglich einen Festkörpergehalt von etwa 25 % auf.

Die US-A-Re. 30 612 beschreibt lufttrocknende, wasserlösliche, Urethanmodifizierte Alkydharze, bei deren Herstellung an sich bekannte Ausgangsmaterialien eingesetzt werden, wobei der Hydrophilieträger (Dimethylolpropionsäure) über Estergruppen in das Polymergerüst eingebaut wird. Die Beschichtungsmaterialien weisen ganz erhebliche Mengen an organischen Lösungsmitteln auf. Wegen des Einbaus der Dimethylolpropionsäure über Estergruppen handelt es sich bei den Systemen dieser Vorveröffentlichung um hydrolyseanfällige, wäßrig-organische Systeme einer nur sehr begrenzten Lagerstabitität.

Moderne, hochwertige, wäßrige Alkydharze müssen neben einem hohen lacktechnischen Niveau jedoch Festkörpergehalte über 40 % und einen möglichst niedrigen Anteil organischer Hilfslösemittel aufweisen. Darüber hinaus sollen solche Produkte auch wirtschaftlich herstellbar sein.

Es war demzufolge die der Erfindung zugrundeliegende Aufgabe, die genannten Nachteile des Standes der Technik zu beseitigen und ein einfaches, wirtschaftliches Verfahren zur Herstellung wäßriger, oxidativ trocknender Alkydharze zu entwickeln, das zur Herstellung qualitativ hochwertiger Decklacke geeignet ist, wobei die Festkörpergehalte der wäßrigen Alkydharze größer 40 % betragen und weniger als 10 %, bevorzugt weniger als 7 % organische Hilfslösemittel enthalten sind.

Überraschenderweise wurde gefunden, daß diese Aufgabe durch die Bereitstellung des nachstehend näher beschriebenen erfindungsgemäßen Verfahrens gelöst werden kann. Bei dem erfindungsgemäßen Verfahren handelt es sich um ein Eintopfverfahren, welches zu wäßrigen Bindemitteln mit einem Festkörpergehalt von über 40 Gew.-% und einem Gehalt an Hilfslösungsmitteln von unter 10 Gew.-% führt, die die Herstellung von qualitativ hochwertigen Beschichtungen gestatten.

Gegenstand der Erfindung ist ein Verfahren zur Herstellung wäßriger, oxidativ trocknender Alkydharze mit einem Festkörpergehalt von über 40 Gew.-% und einem Lösungsmittelgehalt von unter 10 Gew.-% durch Einbau einer 2,2Bis(hydroxymethyl)-alkancarbonsäure in ein Alkydharz auf Basis von an sich bekannten Ausgangsmaterialien unter gleichzeitiger Urethan-Modifizierung des Verfahrensprodukts, dadurch gekennzeichnet, daß man
a) 70 bis 88 Gew.-% eines Alkydharzes mit einer Hydroxylzahl von 100 bis 200 und einer Säurezahl von maximal 5, welches durch Umsetzung von
   a1) 40 bis 70 Gew.-% einer Monocarbonsäure-Komponente, die zumindest aus einer Monocarbonsäure des Molekulargewichtsbereichs 122 bis 340 besteht, mit der Maßgabe, daß zumindest 60 Gew.-% der Komponente a1) aus mindestens einer ungesättigten zur oxidativen Trocknung befähigten Fettsäure bestehen,
   a2) 7 bis 20 Gew.-% einer Dicarbonsäure-Komponente, besteht aus mindestens einer Dicarbonsäure des Molekulargewichtsbereichs 116 bis 600 und/oder mindestens einem Anhydrid einer derartigen Dicarbonsäure
   a3) 0 bis 10 Gew.-% einer Diolkomponente des Molekulargewichtsbereichs 62 bis 400 und
   a4) 14 bis 30 Gew.-% einer höherfunktionellen Polyolkomponente, die zumindest aus einem mindestens dreiwertigen Alkohol des Molekulargewichtsbereichs 92 bis 300 besteht,
   hergestellt worden ist, wobei sich die bezüglich a1) bis a4) genannten Prozentsätze zu 100 ergänzen, mit
b) 4 bis 7 Gew.-% einer 2,2-Bis(hydroxymethyl)-alkancarbonsäure mit insgesamt mindestens 5 Kohlenstoffatomen und
c) 10 bis 23 Gew.-% einer Diisocyanatkomponente, bestehend aus mindestens einem organischen Diisocyanat des Molekulargewichtsbereichs 168 bis 294
in einer Eintopfsynthese in 70- bis 95-gew.-%iger organischer Lösung derart zur Reaktion bringt, daß die Komponenten a) und b) vorgelegt, mit geeigneten organischen Lösungsmitteln homogenisiert und in Gegenwart von 0,01 bis 2,5 Gew.-% geeigneter Katalysatoren bei Temperaturen von 50 bis 120° C mit Teil c) derart umgesetzt werden, daß ein Harz mit einem Molekulargewicht Mw von 10 000 bis 70 000, einer Säurezahl von 18 bis 36, erhalten wird, welches noch freie Hydroxylgruppen, jedoch keine Isocyanatgruppen mehr enthält, und dann das Reaktionsgemisch in Wasser dispergiert oder löst, wobei die oben in Zusammenhang mit den Ausgangskomponenten a) bis c) genannten Prozentsätze sich zu 100 ergänzen, und wobei die in das Reaktionsprodukt eingeführten Carboxylgruppen während der Umsetzung oder während des Dispergier- oder Löseschritts durch Zugabe einer Base zu 45 bis 100 % in Carboxylatgruppen überführt werden, wobei die Menge des organischen Lösungsmittels so begrenzt und/oder das organische Lösungsmittel vor und/oder während und/oder nach dem Dispergier- oder Löseschritt soweit entfernt wird, daß der Lösungsmittelgehalt des Verfahrensprodukts unter 10 Gew.-% liegt.

Gegenstand der Erfindung ist auch die Verwendung der nach diesem Verfahren erhältlichen Bindemittel in oder als bei Raumtemperatur oxidativ trocknenden, wäßrigen Lacken und Beschichtungsmassen.

Unter "Alkydharz" werden im Rahmen der Erfindung durch Polykondensation nach an sich bekannten Verfahren aus Alkoholen und Carbonsäuren hergestellte Polykondensate verstanden, wie sie z.B. in D.H. Solomon, The Chemistry of Organic Filmformers, S. 75-101, John Wiley & Sons Inc., New York, 1967, beschrieben sind.

Die nachstehend gemachten Angaben bezüglich der Säurezahlen beziehen sich sowohl auf freie als auch auf neutralisiert vorliegende Carboxylgruppen, wie sie in den Alkydharzen a) bzw. in den erfindungsgemäßen Verfahrensprodukten vorliegen. Auch die im allgemeinen mit vergleichsweise schwachen Basen neutralisierten Carboxylgruppen (Carboxylatgruppen) werden bei der Bestimmung der Säurezahlen durch Titration mit Kaliumhydroxid erfaßt.

Die beim erfindungsgemäßen Verfahren eingesetzten Alkydharze a) weisen eine Hydroxylzahl von 100 bis 200, vorzugsweise 140 bis 190 und eine Säurezahl von maximal 5, vorzugsweise maximal 3 auf. Ihre Herstellung erfolgt durch eine an sich bekannte Umsetzung der obengenannten Ausgangskomponenten a1) bis a4), wobei diese Umsetzung gegebenenfalls unter Zuhilfenahme von üblichen Veresterungskatalysatoren vorzugsweise nach dem Prinzip einer Schmelz- oder Azeotropkondensation bei Temperaturen von 180 bis 240°C unter Wasserabspaltung erfolgt.

Bei der Ausgangskomponente a1) handelt es sich um eine Monocarbonsäure-Komponente, die zumindest aus einer Monocarbonsäure des Molekulargewichtsbereichs 122 bis 340 besteht, mit der Maßgabe, daß zumindest 60 Gew.-% der Komponente a1) aus mindestens einer oxidativ trocknenden Fettsäure bestehen. Geeignete Monocarbonsäuren sind z.B. Benzoesäure, tert.-Butylbenzoesäure, Hexahydrobenzoesäure, gesättigte Fettsäuren wie 2-Ethylhexansäure; Kokosölfettsäure, Sojaölfettsäure, Holzölfettsäure, Safflorölfettsäure, Ricinusfettsäure, Ricinenfettsäure, Erdnußfettsäure, Tallölfettsäuren oder Konjuenfettsäuren.

Bei der Komponente a2) handelt es sich um eine Dicarbonsäure-Komponente, die zumindest aus einer organischen Dicarbonsäure des Molekulargewichtsbereichs 116 bis 600 und/oder zumindest aus einem Anhydrid einer derartigen Dicarbonsäure besteht. Geeignete Dicarbonsäuren bzw. Anhydride sind Phthalsäure(anhydrid), Isophthalsäure, Terephthalsäure, Tetrahydrophthalsäure(anhydrid), Hexahydrophthalsäure(anhydrid), Maleinsäure(anhydrid), Fumarsäure, Adipinsäure, Bernsteinsäure(anhydrid), Dimerfettsäure oder Sebacinsäure.

Bei der Komponente a3) handelt es sich um eine Diolkomponente, die zumindest aus einem zweiwertigen Alkohol des Molekulargewichtsbereichs 62 bis 400 besteht. Geeignete derartige Diole sind z.B. Ethylenglykol, 1,3- und 1,2-Propylenglykol, 1,4-Butandiol, 1,3-Butandiol, 2,3-Butandiol, Hexandiol, Diethylenglykol, Triethylenglykol, hydrierte Bisphenole, 1,4-Cyclohexandiol, 1,4-Cyclohexandimethanol oder Neopentylglykol.

Bei der Komponente a4) handelt es sich um eine höherfunktionelle Polyolkomponente, die zumindest aus einem mindestens dreiwertigen, vorzugsweise 3- oder 4-wertigen Alkohol des Molekulargewichtsbereichs 92 bis 300 besteht. Geeignete höherfunktionelle Alkohole sind beispielsweise Trimethylolpropan, Glycerin oder Pentaerythrit. Vorzugsweise besteht die Komponente a4) ausschließlich aus Pentaerythrit.

Im Falle einer azeotropen Veresterung wird das Schleppmittel, üblicherweise Isooctan, Xylol, Toluol oder Cyclohexan nach beendeter Reaktion im Vakuum abdestilliert.

Bei der Komponente b) handelt es sich um mindestens eine 2,2-Bis(hydroxymethyl)alkancarbonsäure mit insgesamt mindestens 5 Kohlenstoffatomen, vorzugsweise um 2,2-Bis(hydroxymethyl)-propionsäure.

Bei der Komponente c) handelt es sich um eine Diisocyanat-Komponente, bestehend aus mindestens einem organischen Diisocyanat des Molekulargewichtsbereichs 168 bis 294. Geeignet sind beispielsweise Hexamethylendiisocyanat, 1-Isocyanato-3,3,5-trimethyl-5-isocyanatomethylcyclohexan (Isophorondiisocyanat, abgekürzt: IPDI), Toluylen-2,4-diisocyanat, Toluylen-2,6-diisocyanat, 2,4,4-Trimethylhexamethylen-1,6-diisocyanat, Naphthylendiisocyanat und andere Isocyanate wie sie z.B. in "Methoden der organischen Chemie" (Houben-Weyl, Bd. 14/2, 4. Auflage, Georg Thieme Verlag, Stuttgart 1963, S. 61-70 beschrieben werden.

Bei der Durchführung des erfindungsgemäßen Verfahrens werden vorzugsweise 72,5 bis 80 Gew.-% der Komponente a), 4,8 bis 6,5 Gew.-% der Komponente b) und 14 bis 21 Gew.-% der Komponente c) eingesetzt, wobei sich auch bei dieser bevorzugten Arbeitsweise die genannten Prozentsätze zu 100 ergänzen.

Im übrigen werden Art und Mengenverhältnisse der Ausgangskomponenten a) bis c) so gewählt, daß nach beendeter Umsetzung Verfahrensprodukte vorliegen, die ein nach der Gelpermeationschromatographie an geeichten Styragelen ermitteltes Molekulargewicht Mw von 10 000 bis 70 000, vorzugsweise 15 000 bis 45 000, eine Säurezahl von 18 bis 36, vorzugsweise 21 bis 31 und eine Hydroxylzahl von mindestens 40 bei Abwesenheit von freien Isocyanatgruppen aufweisen.

Zur Durchführung der erfindungsgemäßen Umsetzung werden das Alkydharz a), die 2,2-Bis(hydroxymethyl)alkancarbonsäure b) und das Lösungsmittel homogenisiert, dann bei 50 bis 120°C das Diisocyanat c) innerhalb eines Zeitraumes von 1 Minute bis zu 2 Stunden zugegeben und das Reaktionsgemisch unter Ausnutzung der exothermen Reaktion solange bei 80 bis 140°C gerührt, bis ein Harz mit den genannten Kenndaten resultiert.

Zur Beschleunigung der Reaktion und zur Erzielung wasserverdünnbarer Produkte werden geeignete Katalysatoren wie z.B. Dibutylzinnoxid, Dibutylzinndilaurat, Triethylamin in Mengen von 0,01 bis zu 2,5 Gew.-%, bezogen auf das Gewicht des gesamten Reaktionsansatzes, zugesetzt.

Die Umsetzung wird in nicht isocyanatreaktiven Lösemitteln bei Festgehalten von 70 bis 95 % durchgeführt. Geeignete Lösemittel sind z.B. Aceton, Dimethyldiglykol, N-Methylpyrrolidon, N-Methylcaprolacton, Ethylglykolacetat bzw. Gemische dieser wasserverdünnbaren Lösemittel mit anderen Lösemitteln wie z.B. n-Butylacetat, Methoxypropylacetat, Xylol, Toluol, Solvent Naphtha.

Werden besondere hohe Anforderungen an den Restgehalt organischer Lösemittel gestellt, so kann ein Teil oder die Gesamtmenge des Lösemittels vor und/oder während und/oder nach der Neutralisation bzw. dem Dispergieren des Harzes in Wasser destillativ, abgetrennt werden. Eine destillative Abtrennung von Lösemitteln aus dem dispergierten Harz ist dabei nur bei solchen Lösemitteln sinnvoll, die mit Wasser ein Azeotrop bilden.

Nach der Urethanisierungsreaktion können zur Erzielung bestimmter Eigenschaften auch geringe Mengen anderer organischer Lösemittel wie z.B. Ethanol, n-Propanol, iso-Propanol, n-Butanol, iso-Butanol, tert.-Butanol, Pentanol, Hexanol, Octanol, Butylglykol, Ethylglykol, Butyldiglykol, Ethyldiglykol, Methyldiglykol, Methoxypropanol zugesetzt werden.

Die 70 bis 95 %ige Harzlösung wird in Wasser und/oder falls die zumindest teilweise Neutralisation der Carboxylgruppen nicht bereits früher erfolgte, in einem Gemisch aus Wasser und Neutralisationsmittel dispergiert bzw. gelöst.

Neutralisationsmittel werden in solchen Mengen eingesetzt, daß 45 bis 100, bevorzugt 50 bis 80 % der zur Anionenbildung befähigten Gruppen neutralisiert werden.

Insbesondere bei Verwendung von tert.-Aminen, wie Triethylamin als Neutralisationsmittel, können diese, da sie auch als Katalysatoren für die Isocyanat-Addition wirken, bereits vor dieser Reaktion zugesetzt werden.

Geeignete Neutralisationsmittel sind z.B. Alkalihydroxide, Ammoniak, Dimethylamin, Diethylamin, Dipropylamin, Dibutylamin, Trimethylamin, Triethylamin, Tripropylamin, Tributylamin, Triethanolamin, Monoethanolamin, N-Dimethylethanolamin, N-Methylethanolamin, Diethanolamin, N-Methyldiethanolamin, Monoisopropanolamin, Diisopropanolamin, Triisopropanolamin, Morpholin, N-Methylmorpholin, 2-Amino-2-methyl-1-propanol und Gemische derartiger Basen. Besonders bevorzugt sind Ammoniak und Triethylamin.

Der Festgehalt, der so hergestellten, wäßrigen Alkydharze beträgt mehr als 40 %, der Anteil an organischen Lösemitteln liegt unter 10, bevorzugt unter 7 Gew.-%.

Die erfindungsgemäßen Verfahrensprodukte können ohne weiteres als bei Raumtemperatur oxidativ trocknende, wäßrige Lacke oder Beschichtungsmassen eingesetzt werden. Vorzugsweise werden ihnen jedoch die aus der Lacktechnologie üblichen Hilfs- und Zusatzmittel wie z.B. Pigmente, Trocknungsbeschleuniger, Hautverhinderungsmittel, Verdicker, Verlaufshilfsmittel, Antischaummittel einverleibt. Einige dieser Zusatzmittel können eventuell auch schon während der Herstellung der wäßrigen Bindemittel dem Reaktionsansatz zugefügt werden, falls hierdurch das Herstellungsverfahren nicht gestört wird. Auf diese Weise entstehen hochwertige, bei Raumtemperatur oxidativ trocknende, wäßrige Lacke und Beschichtungsmassen. Sie können durch an sich bekannte Methoden wie beispielsweise Spritzen, Fluten, Tauchen, Walzen, Rakeln, Gießen oder Streichen auf beliebige Substrate wie Holz, Papier, Metall, Kunststoffe und Glas aufgebracht werden.

Die Lacke trocknen bei Raumtemperatur bzw. bei forcierter Wärmetrocknung zu klaren, vernetzten, glänzenden Überzügen.

In den nachfolgenden Beispielen beziehen sich alle Prozentangaben auf Gewichtsprozente.

### Beispiel 1

In ein 5 l-Reaktionsgefäß mit Rühr-, Kühl- und Heizvorrichtung werden 367 g Isophthalsäure, 752 g Pentaerythrit, 1549 g Sojaölfettsäure, 774 g Konjuvandolfettsäure und 1,6 g Dibutylzinnoxid als Veresterungskatalysator eingewogen und unter N₂-Durchleiten in einer Stunde auf 140°C aufgeheizt. Dann wird in 5 h auf 190°C aufgeheizt und solange gehalten, bis die Säurezahl ca. 2,5 beträgt. Die OH-Zahl dieses speziellen, niedermolekularen Alkydharzes beträgt 164, die Ausbeute 3220 g. Man läßt auf 120°C abkühlen, gibt 636 g N-Methylpyrrolidon, 255 g Bis(hydroxymethyl)propionsäure und 4,1 g Dibutylzinndilaurat zu, rührt bei 100 bis 120°C bis eine homogene Mischung erhalten wird und kühlt dann auf 75°C ab. Dann werden 789 g Isophorondiisocyanat auf einmal zugegeben und die Reaktionsmischung unter Ausnutzung der exothermen Reaktion solange bei ca. 110°C gerührt, bis keine NCO-Gruppen mehr nachgewiesen werden können. Man erhält eine hochviskose 87 %ige Harzschmelze des wasserverdünnbaren Alkydharzes 1), welches eine Säurezahl von ca. 28 (100 %ig) und noch freie Hydroxylgruppen aufweist. 4800 g dieser 87 %igen Harzschmelze werden in einem Gemisch aus 4760 g Wasser und 94 g Triethylamin gelöst. Die Mischtemperatur beträgt etwa 60°C. Das wäßrige Alkydharz 1) wird noch 2 Stunden bei 50 bis 60°C gerührt, mit 62,6 g Hautverhinderungsmittel ®Ascinin R conz (Bayer AG) versetzt und dann filtriert. Man erhält das wäßrige Alkydharz 1) mit einem Festgehalt von ca. 43 % und einem pH-Wert von ca. 7. Der Neutralisationsgrad beträgt ca. 50 %.

### Beispiel 2

In ein 5 l-Reaktionsgefäß mit Rühr-, Kühl- und Heizvorrichtung werden 261 g Phthalsäureanhydrid, 244 g Isophthalsäure, 1562 g Sojaölfettsäure, 323 g Benzoesäure, 759 g Pentaerythrit und 85 g 1,4-Cyclohexandimethanol eingewogen und unter Durchleiten von 5 bis 6 l N₂/Stunde auf 140°C aufgeheizt. Dann wird in 8 Stunden auf 220°C aufgeheizt und gehalten bis die Säurezahl ≦3 beträgt. Die OH-Zahl dieses speziellen, niedermolekularen Alkydharzes beträgt 164, die Ausbeute 3000 g. Man läßt auf 80°C abkühlen, gibt 593 g N-Methylpyrrolidon und 234 g 2,2-Bis(hydroxymethyl)-propionsäure zu, homogenisiert und gibt dann 105 g Triethylamin zu. Anschließend werden 734 g Isophorondiisocyanat auf einmal zugegeben und die Reaktionsmischung unter Ausnutzung oder exothermen Reaktion solange bei 100 bis 110°C gerührt, bis keine NCO-Gruppen mehr nachweisbar sind. Man erhält eine hochviskose, 87 %ige Harzschmelze des wasserverdünnbaren Alkydharzes 2), welches eine Säurezahl von ca. 28 (100 %ig) und noch freie Hydroxylgruppen aufweist.

4658 g dieser Harzschmelze werden in 4280 g Wasser dispergiert bzw. gelöst. Die Mischtemperatur beträgt etwa 60°C. Das wäßrige Alkydharz 2) wird noch 2 Stunden bei 50 bis 60°C gerührt, mit 58 g Hautverhinderungsmittel ®Ascinin R conz (Bayer AG) versetzt und dann filtriert. Man erhält das wäßrige Alkydharz 2) mit einem Festgehalt von ca. 44 % und einem pH-Wert von ca. 7,2. Der Neutralisationsgrad beträgt ca. 60 %.

### Beispiel 3

In ein 5 l-Reaktionsgefäß mit Rühr-, Kühl- und Heizvorrichtung werden 118 g Hexahydrophthalsäureanhydrid, 393 g Isophthalsäure, 1104 g Sojaölfettsäure, 442 g Erdnußfettsäure, 481 g Benzoesäure und 858 g Pentaerythrit eingewogen und unter einem N₂-Strom in 1 Stunde auf 140°C, dann in 8 Stunden auf 220°C aufgeheizt und solange gerührt bis die Säurezahl <3 ist. Die OH-Zahl dieses speziellen Alkydharzes beträgt 170, die Ausbeute 3125 g. Man läßt auf 120°C abkühlen, gibt 313 g N-Methylpyrrolidon, 202 g n-Butylacetat, 244 g 2,2-Bis(hydroxymethyl)-propionsäure und 4 g Dibutylzinndilaurat zu, homogenisiert, kühlt dann auf 80°C ab und gibt 795 g IPDI in einer Stunde zu. Anschließend rührt man bei 110 bis 120°C solange bis keine NCO-Gruppen mehr nachgewiesen werden können. Anschließend wird das Butylacetat durch verstärktes N₂-Durchleiten abdestilliert und Butylglykol für einen Festgehalt von 87 % zugegeben. Anschließend werden 78 g Bleioctoat und 15,5 g Kobaltoctoat zugegeben und homogenisiert. Die Harzschmelze wird dann in einem Gemisch aus 4700 g Wasser und 138 g Triethylamin dispergiert bzw. gelöst. Die Mischtemperatur beträgt etwa 50°C. Das wäßrige Alkydharz wird noch 2 Stunden bei 50 bis 60°C gerührt, mit 73 g Hautverhinderungsmittel ®Ascinin R conz (Bayer AG) versetzt und dann filtriert. Man erhält das wäßrige Alkydharz 3) mit einem Festgehalt von ca. 44 % und einem pH-Wert von 7,0. Der Neutralisationsgrad beträgt etwa 70 %.

### Beispiel 4

In ein 5 l-Reaktionsgefäß mit Rühr-, Kühl- und Heizvorrichtung werden 182,3 g Phthalsäureanhydrid, 204,6 g Isophthalsäure, 1381 g Sojaölfettsäure, 255,7 g Benzoesäure und 671 g Pentaerythrit eingewogen, unter N₂-Durchleiten in 1 Stunde auf 140°C, dann in 8 Stunden auf 220°C aufgeheizt und solange gehalten bis die Säurezahl ≦3 beträgt. Die OH-Zahl dieses speziellen, niedermolekularen Alkydharzes beträgt 173, die Ausbeute 2500 g. Man läßt auf 130°C abkühlen, gibt 368 g n-Methylpyrrolidon, 195 g 2,2-Bis(hydroxymethyl)-propionsäure und 3,3 g Dibutylzinnoxid zu, homogenisiert, kühlt auf 80°C ab und gibt dann 620 g Isophorondiisocyanat zu. Das Reaktionsgemisch wird bei 110 bis 120°C gehalten bis kein NCO mehr nachgewiesen werden kann, dann werden 217 g Butylglykol, 33,2 g ethoxyliertes Nonylphenol und 12,4 g Cobaltoctoat zugegeben und homogenisiert. Man erhält eine 85 %ige Harzschmelze des wasserverdünnbaren Alkydharzes 4), welches eine Säurezahl von ca. 29 (100 %ig) und noch freie Hydroxylgruppen aufweist.

Die Harzschmelze wird in einem Gemisch aus 3406 g Wasser und 37 g Ammoniak (33 %ig) dispergiert bzw. gelöst. Die Mischtemperatur beträgt etwa 60°C. Das wäßrige Alkydharz wird noch 2 Stunden bei 50 bis 60°C gerührt, mit 51,8 g Hautverhinderungsmittel ®Ascinin R conz versetzt und filtriert. Man erhält das wäßrige Alkydharz 4) mit einem Festgehalt von 45 % und einem pH-Wert von ca. 6,8, der Neutralisationsgrad beträgt ca. 50 %.

Die nach den erfindungsgemäßen Beispielen hergestellten, wäßrigen Alkydharzbindemittel sind bei Raumtemperatur mindestens 1 Jahr lagerstabil, bei 40°C Lagerung mindestens 6 Monate.

Daraus hergestellte Weißlacke (Pigment: Bindemittelverhältnis = 0,65:1) haben bei einer Applikationsviskosität von ca. 25 Sekunden Festgehalte von ca. 45 bis 65 % und enthalten etwa 5 % organische Colöser.

Sie trocknen bei Raumtemperatur in 3 bis 8 Stunden klebfrei auf und besitzen nach 24 Stunden Trocknung gute Wasser- und Lösemittelbestandlgkeit. Die Bindemittel weisen ein hohes Härte-/Elastizitätsniveau auf und lassen sich z.B. durch Spritzen, Tauchen, Gießen und Streichen sehr gut verarbeiten. Die Überzüge zeigen ein ausgezeichnetes filmoptisches Niveau, die Glanzwerte (20° Winkel) liegen bei 70 bis 80 %.

## Patentansprüche

1. Verfahren zur Herstellung wäßriger, oxidativ trocknender Alkydharze mit einem Festkörpergehalt von über 40 Gew.-% und einem Lösungsmittelgehalt von unter 10 Gew.-% durch Einbau einer 2,2-Bis(hydroxymethyl)-alkancarbonsäure in ein Alkydharz auf Basis von an sich bekannten Ausgangsmaterialien unter gleichzeitiger Urethan-Modifizierung des Verfahrensprodukts, dadurch gekennzeichnet, daß man
a) 70 bis 88 Gew.-% eines Alkydharzes mit einer Hydroxylzahl von 100 bis 200 und einer Säurezahl von maximal 5, welches durch Umsetzung von
a1) 40 bis 70 Gew.-% einer Monocarbonsäure-Komponente, die zumindest aus einer Monocarbonsäure des Molekulargewichtsbereichs 122 bis 340 besteht, mit der Maßgabe, daß zumindest 60 Gew.-% der Komponente a1) aus mindestens einer ungesättigten zur oxidativen Trocknung befähigten Fettsäure bestehen,
a2) 7 bis 20 Gew.-% einer Dicarbonsäure-Komponente, besteht aus mindestens einer Dicarbonsäure des Molekulargewichtsbereichs 116 bis 600 und/oder mindestens einem Anhydrid einer derartigen Dicarbonsäure
a3) 0 bis 10 Gew.-% einer Diolkomponente des Molekulargewichtsbereichs 62 bis 400 und
a4) 14 bis 30 Gew.-% einer höherfunktionellen Polyolkomponente, die zumindest aus einem mindestens dreiwertigen Alkohol des Molekulargewichtsbereichs 92 bis 300 besteht,
hergestellt worden ist, wobei sich die bezüglich a1) bis a4) genannten Prozentsätze zu 100 ergänzen, mit
b) 4 bis 7 Gew.-% einer 2,2-Bis(hydroxymethyl)-alkancarbonsäure mit insgesamt mindestens 5 Kohlenstoffatomen und
c) 10 bis 23 Gew.-% einer Diisocyanatkomponente, bestehend aus mindestens einem organischen Diisocyanat des Molekulargewichtsbereichs 168 bis 294
in einer Eintopfsynthese in 70- bis 95-gew.-%iger organischer Lösung derart zur Reaktion bringt, daß die Komponenten a) und b) vorgelegt, mit geeigneten organischen Lösungsmitteln homogenisiert und in Gegenwart von 0,01 bis 2,5 Gew.-% geeigneter Katalysatoren bei Temperaturen von 50 bis 120° C mit Teil c) derart umgesetzt werden, daß ein Harz mit einem Molekulargewicht Mw von 10 000 bis 70 000, einer Säurezahl von 18 bis 36, erhalten wird, welches noch freie Hydroxylgruppen, jedoch keine Isocyanatgruppen mehr enthält, und dann das Reaktionsgemisch in Wasser dispergiert oder löst, wobei die oben in Zusammenhang mit den Ausgangskomponenten a) bis c) genannten Prozentsätze sich zu 100 ergänzen, und wobei die in das Reaktionsprodukt eingeführten Carboxylgruppen während der Umsetzung oder während des Dispergier- oder Löseschritts durch Zugabe einer Base zu 45 bis 100 % in Carboxylatgruppen überführt werden, wobei die Menge des organischen Lösungsmittels so begrenzt und/oder das organische Lösungsmittel vor und/oder während und/oder nach dem Dispergier- oder Löseschritt soweit entfernt wird, daß der Lösungsmittelgehalt des Verfahrensprodukts unter 10 Gew.-% liegt.

2. Verfahren gemäß Anspruch 1, dadurch gekennzeichnet, daß man als Komponente a4) ausschließlich Pentaerythrit verwendet.

3. Verfahren gemäß Anspruch 1 und 2, dadurch gekennzeichnet, daß man als Komponente b) 2,2-Dimethylolpropionsäure verwendet.

4. Verfahren gemäß Anspruch 1 bis 3, dadurch gekennzeichnet, daß man als Komponente c) 1-Isocyanato-3,3,5-trimethyl-5-isocyanatomethyl-cyclohexan verwendet.

5. Verfahren gemäß Anspruch 1 bis 4, dadurch gekennzeichnet, daß man das Alkydharz a) durch Schmelz- oder Azeotropkondensation der Ausgangskomponenten a1) bis a4) herstellt.

6. Verwendung der gemäß Anspruch 1 bis 5 erhältlichen wäßrigen Bindemittel in oder als bei Raumtemperatur oxidativ trocknenden, wäßrigen Lacken oder Beschichtungsmassen.

## Claims

1. A process for the preparation of aqueous, oxidatively drying alkyd resins having a solids content above 40% by weight and a solvent content below 10% by weight by the incorporation of a 2,2-bis-(hydroxymethyl)-alkanecarboxylic acid in an alkyd resin based on starting materials known per se with concomitant urethane-modification of the product of the process, characterised in that
a) from 70 to 88% by weight of an alkyd resin having a hydroxyl number of from 100 to 200 and an acid number of at most 5, which has been prepared by the reaction of
a1) from 40 to 70% by weight of a monocarboxylic acid component consisting of at least one monocarboxylic acid in the molecular weight range of from 122 to 340, under the condition that at least 60% by weight of component a1) consist of at least one unsaturated fatty acid capable of oxidative drying,
a2) from 7 to 20% by weight of a dicarboxylic acid component consisting of at least one dicarboxylic acid in the molecular weight range of from 116 to 600 and/or at least one anhydride of such a dicarboxylic acid,
a3) from 0 to 10% by weight of a diol component in the molecular weight range of from 62 to 400 and
a4) from 14 to 30% by weight of a higher functional polyol component consisting of at least one at least trihydric alcohol in the molecular weight range of from 92 to 300,
the percentages mentioned with reference to a1) to a4) adding up to 100, are reacted with
b) from 4 to 7% by weight of a 2,2-bis-(hydroxymethyl)-alkane carboxylic acid having a total of at least 5 carbon atoms and
c) from 10 to 23% by weight of a diisocyanate component consisting of at least one organic diisocyanate in the molecular weight range of from 168 to 294
by a one-shot synthesis in a 70 to 95% by weight organic solution by introducing components a) and b) into the reaction vessel, homogenizing these components with suitable organic solvents and reacting them with component c) at temperatures of from 50 to 120°C in the presence of from 0.01 to 2.5% by weight of suitable catalysts so that a resin having a molecular weight Mw of from 10,000 to 70,000 and an acid number of from 18 to 36 is obtained, which resin still contains free hydroxyl groups but no longer contains isocyanate groups, the reaction mixture being then dispersed or dissolved in water, the percentages of starting components a) to c) mentioned above adding up to 100, and from 45 to 100% of the carboxyl groups introduced into the reaction product being converted into carboxylate groups by the addition of a base during the reaction or during the process of dispersing or dissolving the reaction mixture, the quantity of organic solvent being limited to such an extent and/or the organic solvent being removed before and/or during and/or after the step of dispersion or solution that the solvent content of the product of the process is below 10% by weight.

2. A process according to Claim 1, characterised in that component a4) consists entirely of pentaerythritol.

3. A process according to Claims 1 and 2, characterised in that 2,2-dimethylolpropionic acid is used as component b).

4. A process according to Claims 1 to 3, characterised in that 1-isocyanato-3,3,5-trimethyl-5-isocyanatomethylcyclohexane is used as component c).

5. A process according to Claims 1 to 4, characterised in that the alkyd resin a) is prepared by solvent-free condensation or azeotropic condensation of the starting components a1) to a4).

6. Use of the aqueous binders obtainable according to Claims 1 to 5 in or as aqueous lacquers or coating compounds capable of oxidative drying at room temperature.

## Revendications

1. Procédé de production de résines alkyd aqueuses séchant par oxydation, ayant une teneur en matière solide de plus de 40 % en poids et une teneur en solvant de moins de 10 % en poids, par incorporation d'un acide 2,2-bis(hydroxyméthyl)-alcanecarboxylique dans une résine alkyd à base de matières de départ connues et modification simultanée en uréthanne du produit obtenu, caractérisé en ce qu'on fait réagir
a) 70 à 88 % en poids d'une résine alkyd ayant un indice d'hydroxyle de 100 à 200 et un indice d'acide au maximum égal à 5, qui a été préparée par réaction
a1) de 40 à 70 % en poids d'un composant acide monocarboxylique qui est constitué d'au moins un acide monocarboxylique de poids moléculaire compris dans la plage de 122 à 340, sous réserve qu'au moins 60 % en poids du composant a1) soient constitués d'au moins un acide gras non saturé apte au séchage par oxydation,
a2) de 7 à 20 % en poids d'un composant acide dicarboxylique constitué d'au moins un acide dicarboxylique de poids moléculaire compris dans la plage de 116 à 600 et/ou d'au moins un anhydride d'un tel acide dicarboxylique,
a3) de 0 à 10 % en poids d'un composant diol de poids moléculaire compris dans la plage de 62 à 400 et
a4) de 14 à 30 % en poids d'un composant polyol de plus grande fonctionnalité, qui est au moins constitué d'un alcool au moins trivalent de poids moléculaire compris dans la plage de 92 à 300,
les pourcentages mentionnés en a1) à a4) se complétant à 100 %, avec
b) 4 à 7 % en poids d'un acide 2,2-bis(hydroxyméthyl)-alcanecarboxylique ayant au total au moins 5 atomes de carbone et
c) 10 à 23 % en poids d'un composant diisocyanate constitué d'au moins un diisocyanate organique de poids moléculaire compris dans la plage de 168 à 294
dans une synthèse en récipient unique dans un solvant organique à 70-95 % en poids, de façon telle qu'on charge tout d'abord les composants a) et b), on les homogénéise avec des solvants organiques appropriés et on les fait réagir en présence de 0,01 à 2,5 % en poids de catalyseurs appropriés, à des températures de 50 à 120°C avec la partie c) de manière à obtenir une résine ayant un poids moléculaire Mₚ de 10 000 à 70 000, un indice d'acide de 18 à 36, qui contient des groupes hydroxyle encore libres, mais qui ne contient plus de groupes isocyanate, puis on disperse ou on dissout le mélange réactionnel dans l'eau, les pourcentages mentionnés ci-dessus à propos des composants de départ a) à c) se complétant à 100, et les groupes carboxyle incorporés au produit réactionnel sont convertis à 45-100 % en groupes carboxylate pendant la réaction ou pendant la phase de dispersion ou de dissolution par addition d'une base, la quantité de solvant organique étant limitée de façon telle, et/ou le solvant organique étant éliminé avant et/ou pendant et/ou après la phase de dispersion ou de dissolution dans une mesure telle, que la teneur en solvant du produit final soit inférieure à 10 % en poids.

2. Procédé suivant la revendication 1, caractérisé en ce qu'on utilise comme composant a4) exclusivement du pentaérythritol.

3. Procédé suivant les revendications 1 et 2, caractérisé en ce qu'on utilise comme composant b) de l'acide 2,2-diméthylolpropionique.

4. Procédé suivant les revendications 1 à 3, caractérisé en ce qu'on utilise comme composant c) le 1-isocyanato-3,3,5-triméthyl-5-isocyanatométhyl-cyclohexane.

5. Procédé suivant les revendications 1 à 4, caractérisé en ce qu'on produit la résine alkyd a) par condensation par fusion ou condensation azéotropique des composants de départ a1) à a4).

6. Utilisation des liants aqueux obtenus suivant les revendications 1 à 5 dans des, ou comme, peintures ou compositions de revêtement aqueuses séchant par oxydation à la température ambiante.
